**Europäisches Patentamt**

**European Patent Office**

**Office européen des brevets**

(11) Veröffentlichungsnummer: **0 017 105**
**A1**

(12) # EUROPÄISCHE PATENTANMELDUNG

(21) Anmeldenummer: **80101505.8**

(22) Anmeldetag: **21.03.80**

(51) Int. Cl.³: **F 24 J 3/02**
F 24 D 17/00, F 24 D 11/00
F 24 H 7/00

(30) Priorität: 30.03.79 DE 2912785
20.04.79 DE 2915934

(43) Veröffentlichungstag der Anmeldung:
**15.10.80** Patentblatt **80/21**

(84) Benannte Vertragsstaaten:
**AT CH DE FR GB IT NL SE**

(71) Anmelder: **Hauptmann, Hans**
**Am Graben 20**
**D-8500 Nürnberg(DE)**

(72) Erfinder: **Hauptmann, Hans**
**Am Graben 20**
**D-8500 Nürnberg(DE)**

(74) Vertreter: **LOUIS, PÖHLAU, LOHRENTZ & SEGETH**
**Kesslerplatz 1**
**D-8500 Nürnberg(DE)**

(54) **Mit Sonnenenergie betriebener Warmwasserbereiter.**

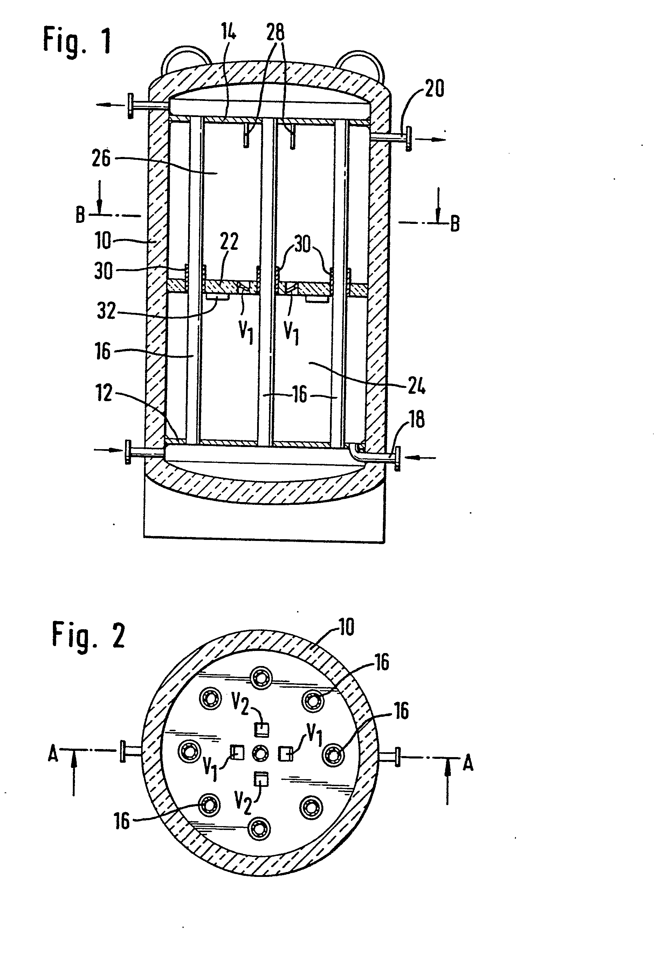

(57) Ein mit Sonnenenergie betriebener Warmwasserbereiter mit einem Behälter (10) weist mindestens eine den Behälter (10) in zwei Kammern (24, 26) unterteilende Trennscheibe (22) auf, die in einer ersten Ausführungsform der Erfindung (Figur 1) zwischen dem Kaltwasserzulauf (18) und dem Warmwasserablauf (20) verschiebbar ist und in einer Endstellung einen freien Wasserdurchlauf zwischen dem Kaltwasserzulauf (18) und dem Warmwasserablauf (20) zulässt und in einer zweiten Ausführungsform der Erfindung feststehend angeordnet ist und ein vom Kaltwasserzulauf (18) zum Warmwasserablauf (20) hin öffnendes Ventil aufweist, wobei bei dieser zweiten Ausführungsform der Erfindung vorzugsweise mehrere Trennwände zur Unterteilung des Behälters in mehrere Kammern vorgesehen sind.

**Fig. 1**

EP 0 017 105 A1

- 1 -

## Mit Sonnenenergie betriebener Warmwasserbereiter

Die Erfindung betrifft einen mit Sonnenenergie betriebenen Warmwasserbereiter, mit einem Behälter, einem Kaltwasserzulauf und einem Warmwasserablauf sowie mit von Heizmedium durchströmten Rohren, wobei zwischen dem Zulauf und dem Ablauf mindestens eine den Behälter-Innenraum in zwei Kammern unterteilende Trennwand angeordnet ist.

Mit Sonnenenergie betriebene Warmwasserbereiter haben den Nachteil, dass bei mangelnder Sonneneinstrahlung, z.B. nachts, das bei der Entnahme von Warmwasser nachströmende Kaltwasser sich mit der im Behälter verbleibenden Warmwassermenge vermischt, so dass die Wassertemperatur in dem Behälter auch dann erheblich abfällt, wenn nur eine relativ geringe Menge an Warmwasser entnommen wird. In der Praxis kann das zur Folge haben, dass eine zusätzliche statische Heizung der Solarheizung nachgeschaltet werden muss, obwohl - wenn keine Vermischung eintreten würde - an sich noch genügend Warmwasser mit der gewünschten Temperatur zur Verfügung stünde.

Ferner kann sich die Vermischung von Warmwasser und Kaltwasser bei abgeschalteter Solarheizung auch bei der Wiederaufnahme des Betriebes der Solarheizung insofern ungünstig auswirken, als die Mischtemperatur in dem an die Solarheizung angeschlossenen Behälter bei der Wiederaufnahme des Solarheizungsbetriebes in den frühen Morgenstunden über der Temperatur des Heizmediums liegen kann, so dass die Solarheizung, obwohl das Heizmedium über die Sonnenkollektoren bereits Energie aufnimmt, nicht wirksam werden kann. Erst wenn das Heizmedium eine höhere Temperatur hat als die des Wassers in dem Behälter, tritt ein Heizeffekt auf, der umso grösser ist, je grösser der Temperaturunterschied ist. Daher kann es sein, dass auch in den frühen Morgenstunden eine nachgeschaltete Zusatzheizung eingeschaltet werden muss.

Aus dem DE-GM 77 09 124 ist nun bereits ein mit Sonnenenergie betriebener Warmwasserbereiter der eingangs genannten Art bekannt, wobei die Trennwand feststehend ausgebildet ist und den Behälter-Innenraum in eine die Solarheizung enthaltende und in eine eine Zusatzheizung enthaltende Kammer unterteilt. Ferner weist die Trennwand mindestens zwei Öffnungen auf.

Bei diesem bekannten Warmwasserbereiter sind die oben angesprochenen Schwierigkeiten, die nach dem Abschalten der Solarheizung und bei der Wiederaufnahme ihres Betriebes auftreten, nicht beseitigt, da sich in der Kammer, in der sich die Solarheizung befindet, das entsprechend der entnommenen Warmwassermenge nachströmende Kaltwasser mit der in dieser Kammer verbleibenden Warmwassermenge vollkommen vermischt, so dass die Wassertemperatur erheblich abfällt und durch die auf der anderen Seite der Trennscheibe nachfolgende Zusatzheizung ausgeglichen werden muss. Ausserdem sorgen die zwei Öffnungen in der Trennscheibe für eine Zirkulation des Wassers zwischen den Kammern, damit im normalen Betrieb unter alleiniger Ausnutzung der Sonnenenergie auch das Wasser in der Kammer aufgeheizt werden kann, in der sich die Zusatzheizung befindet.

Aus der DE-AS 12 48 265 ist ein Warmwasserbereiter bekannt, bei dem ein Behälter durch eine nachgiebige Trennwand in zwei Kammern unterteilt ist, die wechselweise etwa die Grösse des gesamten Füllraumes annehmen können und mit Hilfe einer Wechsel-Ventilschaltung abwechselnd mit dem Kaltwasserzulauf und dem Warmwasserablauf verbindbar sind. Das Heizmedium, vorzugsweise Feuergase, durchströmt dabei einen Ringmantel ausserhalb des Behälters.

- 4 -

Durch die nachgiebige, abwechselnd zu beiden Enden des Behälters hin einstülpbare Membran lässt sich in Verbindung mit der Wechsel-Ventilschaltung zwar bei Warmwasserentnahme eine Vermischung des Kaltwassers mit dem Warmwasser vermeiden, jedoch eignet sich diese Anordnung aufgrund der konstruktionsbedingten schlechten Wärmeabgabe des Heizmediums von Haus aus nicht für eine Solarheizung. Das Scheuern der einstülpbaren Membran an der Innenwandung des Behälters lässt keine hohe Lebensdauer erwarten und schliesslich lässt sich dieser Warmwasserbereiter nicht als normaler Warmwasserdurchlaufspeicher verwenden, wie dies bei einem Warmwasserbereiter mit Solarheizung wünschenswert ist.

Der Erfindung liegt nun die Aufgabe zugrunde, einen Warmwasserbereiter der eingangs genannten Art derart auszubilden, dass - ohne Verwendung einer Zusatzheizung - die beiden oben in Verbindung mit der Abschaltung der Solarheizung und der Wiederaufnahme des Solarheizungsbetriebes angesprochenen Probleme gleichzeitig und mit einfachen technischen Mitteln gelöst sind, so dass eine optimale Ausnutzung der Sonnenenergie von der Funktionsweise der Anlage her gegeben ist.

Diese Aufgabe wird gemäss einer ersten Ausführungsform der Erfindung dadurch gelöst, dass die Rohre innerhalb des Behälters angeordnet sind und sich praktisch über die gesamte Behälterlänge zwischen

- 5 -

dem Kaltwasserzulauf und dem Warmwasserablauf erstrecken und dass die steife Trennwand als zwischen dem Kaltwasserzulauf und dem Warmwasserablauf verschiebbare Trennscheibe ausgebildet ist, die eine bei einer Bewegung vom Warmwasserablauf zum Kaltwasserzulauf sich öffnende Ventileinrichtung aufweist und die in einer Endstellung einen Wasserdurchlauf vom Kaltwasserzulauf zum Warmwasserablauf zulässt.

Im normalen Betrieb des Warmwasserbereiters bei voll wirksamer Solarheizung befindet sich die Trennscheibe am zulaufseitigen Ende des Behälters und lässt das nachströmende Kaltwasser in den Behälter-Innenraum, wo es sich mit dem dort vorhandenen Warmwasser vermischt. Der dadurch bedingte Temperaturabfall wird durch die Solarheizung aufgefangen.

Wird die Solarheizung abends abgeschaltet, so wird die Trennscheibe entriegelt und bewegt sich nunmehr entsprechend der zuströmenden Kaltwassermenge bzw. der abströmenden Warmwassermenge vom Kaltwasserzulauf zum Warmwasserablauf, wobei sie den Behälter-Innenraum in zwei gegeneinander strömungsmitteldicht verschlossene Kammern unterteilt, so dass eine Vermischung des im Behälter verbleibenden Warmwassers mit dem nachfliessenden Kaltwasser verhindert wird. Das bei abgeschalteter Solarheizung aus dem Behälter entnommene Warmwasser hat also, wenn man von den Wärmeverlusten an die Umgebung absieht, trotz des nachlaufenden Kaltwassers die gleiche Tempera-

- 6 -

tur wie bei eingeschalteter Solarheizung. Erst wenn das Warmwasser aus dem Behälter vollständig abgelaufen ist und sich die Trennscheibe an dem ablaufseitigen Ende des Behälters befindet, lässt die Trennscheibe das nachlaufende Kaltwasser in den Warmwasserablauf strömen. Erst dann muss eine eventuell vorhandene Zusatzheizung in einer nachfolgenden Anordnung eingeschaltet werden.

Für den freien Wasserdurchlauf vom Kaltwasserzulauf zum Warmwasserablauf nach völliger Entnahme des durch die Solarheizung aufgeheizten Warmwassers bzw. im normalen Betrieb der Solarheizung, in dem der Warmwasserbereiter als Durchlauferhitzer arbeitet, kann gemäss einer weiteren Ausbildung der ersten Ausführungsform die Trennscheibe eine Ventileinrichtung aufweisen, die vorzugsweise beim am Warmwasserablauf befindlicher Trennscheibe öffnet. Die Ventileinrichtung kann dabei als ein durch den Druck des Kaltwassers in Schliessstellung beaufschlagtes Ventil ausgebildet sein, das durch einen am Warmwasserablauf angeordneten Anschlag zu öffnen ist.

Anstelle der einen freien Wasserdurchlauf vom Kaltwasserzulauf zum Warmwasserablauf zulassenden Ventileinrichtung kann die Anordnung auch derart getroffen sein, dass die Trennscheibe in ihrer den freien Wasserdurchlauf zulassenden Endstellung vor dem Kaltwasserzulauf bzw. hinter dem Warmwasserablauf positionierbar ist.

Wenn soviel Warmwasser aus dem Behälter bei abgeschalteter Solarheizung entommen worden ist, dass sich die Trennscheibe am ablaufseitigen Ende des Behälters befindet, dann wird vor dem Einschalten der Solarheizung die Trennscheibe von dem ablaufseitigen Ende des Behälters zum zulaufseitigen Ende des Behälters, beispielsweise über einen aussen angebrachten Stellmotor, bewegt, um die oben beschriebene Funktion der Trennscheibe für die nächste Abschaltung der Solarheizung sicherzustellen. Sollte aber, was gewöhnlich bei nicht zu klein dimensionierten Behältern und in Anbetracht der Tatsache, dass bei abgeschalteter Solarheizung, also nachts, in der Regel weniger Warmwasser entnommen wird, nur ein Teil des zu Anfang zur Verfügung stehenden Warmwassers während der Abschaltung der Solarheizung verbraucht worden sein, so befindet sich die Trennscheibe zwischen dem zulaufseitigen und dem ablaufseitigen Ende des Behälters und wird nicht vor dem Einschalten der Solarheizung zum zulaufseitigen Ende hin bewegt. Die zu Beginn des Tages relativ geringe Aufnahme an Solarenergie beim Einschalten der Solarheizung kann dann bereits zum Aufheizen des Kaltwasseranteiles in der entsprechenden Kammer aufgrund der dort vorhandenen Temperaturdifferenz verwendet werden. Erst mit zunehmender Erwärmung des Kaltwassers wird dann die Trennscheibe zum zulaufseitigen Ende des Behälters bewegt.

Gemäss einer zweiten Ausführungsform der Erfindung wird die oben genannte Aufgabe dadurch gelöst, dass die Trennwand als feststehende und mindestens ein sich nach dem Warmwasserablauf öffnendes Rückschlagventil aufweisende Trennwand ausgebildet ist und dass die von Heizmedium durchströmten Rohre in beiden Kammern verlaufen.

Auf diese Weise wird bei bei Wasserentnahme nachlaufendem Kaltwasser einer vollständigen Vermischung des Kaltwassers mit dem im Behälter vorhandenen Warmwasser entgegengewirkt, da sich das nachlaufende Kaltwasser zunächst nur in der zulaufseitigen Kammer mit dem dort vorhandenen Warmwasser vermischt und erst dieses Mischwasser in die ablaufseitige Kammer gelangt, aus der jedoch das dort vorhandene Warmwasser nicht in die dann kältere zulaufseitige Kammer zurückfliessen kann. Aus der ablaufseitigen Kammer lässt sich daher bei abgeschalteter Solarheizung für eine gewisse Zeit Warmwasser entnehmen, dessen Temperatur deutlich höher liegt als die Mischtemperatur, die bei einem Behälter ohne Trennwand, also bei vollständiger Durchmischung des nachlaufenden Kaltwassers mit dem in dem Behälter vorhandenen Warmwasser, auftreten würde.

Wird bei abgeschalteter Solarheizung nicht das gesamte, im Behälter befindliche Wasser entnommen, findet also kein vollständiger Austausch des Warmwassers durch das Kaltwasser statt, so liegt die Temperatur in der ablaufseitigen Kammer immer höher

- 9 -

als in der zulaufseitigen Kammer. Das heisst mit anderen Worten, dass dann die Temperatur in der zulaufseitigen Kammer unterhalb der Mischtemperatur liegt, die bei einem Behälter ohne Trennwand auftreten würde. Daher kann die mit Sonnenenergie betriebene Heizung früher, das heisst bereits bei geringer Aufnahme an Sonnenenergie, wieder in Betrieb gesetzt werden, nämlich sobald die Temperatur des Heizmediums über der Temperatur des Wassers in der zulaufseitigen Kammer liegt, als es der Fall bei einem Behälter ohne Trennwand ist. Die Sonnenenergie lässt sich auf diese Weise besser ausnutzen.

Aufgrund der Tatsache, dass die Trennwand unbeweglich ist, zeigt die zweite Ausführungsform praktisch keine Verschleisserscheinungen und ist weniger störungsanfällig.

Allerdings gestattet die zweite Ausführungsform der Erfindung nicht eine so gute Ausnutzung der Sonnenenergie wie die erste Ausführungsform, da - obwohl das Warmwasser aus der in Strömungsrichtung nachfolgenden Kammer nicht in die in Strömungsrichtung vorhergehende, kältere Kammer fliessen kann - das kältere Wasser aus der vorhergehenden Kammer bei einer Warmwasserentnahme immer in die nachfolgende wärmere Kammer nachfliessen kann. Der Wirkungsgrad kann aber erhöht werden, wenn gemäss einer weiteren Ausbildung der zweiten Ausführungsform der Erfindung der Behälter mittels mehrerer Trennwände in mehr als zwei Kammern unterteilt ist und die Rückschlagventile

- 10-

in den Trennwänden diametral zueinander versetzt liegen.

Die vom Heizmedium durchströmten Rohre müssen nicht durchgehend durch alle Kammern vom zulaufseitigen Ende des Behälters zum ablaufseitigen Ende des Behälters verlaufen. Vielmehr können in den Kammern jeweils unabhängig voneinander steuerbare Rohre angeordnet sein, die sich an sich in beliebiger Richtung erstrecken können, während bei der ersten Ausführungsform der Erfindung sich die Rohre in der Verschiebungsrichtung der Scheibe erstrecken müssen. In den Zuleitungen des Heizmediums zu den einzelnen Rohren können in Abhängigkeit von den Temperaturen des Heizmediums und des Wassers in den Kammern gesteuerte Regelorgane vorgesehen sein.

Bei beiden Ausführungsformen können der Behälter und insbesondere die Trennwand wärmeisoliert ausgebildet sein. Gerade die wärmeisolierte Ausbildung der Trennwand ist offensichtlich für eine optimale Ausnutzung der Sonnenenergie von grosser Bedeutung, weil dadurch bei abgeschalteter Solarheizung, also nachts, wenn wenig Wasser entnommen wird, vermieden wird, dass sich die Temperaturen in den beiden Kammern einander angleichen.

Beide Ausführungsformen haben gegenüber dem Stand der Technik die Merkmale gemeinsam, dass die von durch die Sonne erwärmtes Heizmedium durchströmten Rohre in beiden durch eine Trennwand voneinander getrennten Kammern des Behälters verlaufen, um im
normalen Betrieb der Anlage das Wasser in beiden
Kammern mittels Sonnenenergie aufzuheizen, dass
zumindest bei abgeschalteter Solarheizung das
Warmwasser auf der ablaufseitigen Kammer nicht
zum Kaltwasser in der zulaufseitigen Kammer strömen kann - zumindest solange das durch Sonnenenergie aufgeheizte Warmwasser aus dem Behälter nicht
vollständig entnommen worden ist - und dass die
Trennwand wärmeisoliert ausgebildet werden kann,
weil die von durch Sonnenenergie erwärmtes Heizmedium durchströmten Rohre in beiden Kammern verlaufen. Beide Ausführungsformen beruhen auf dem
gleichen Lösungsgedanken und unterscheiden sich
nur durch die Tatsache, dass einmal die Trennwand
beweglich und das andere Mal unbeweglich ausgebildet ist, sowie durch die dadurch bedingten Modifizierungen.

Weitere Vorteile, Einzelheiten und Merkmale der
Erfindung ergeben sich aus der nachstehenden, anhand der beiliegenden Zeichnung erfolgenden Beschreibung mehrerer Ausführungsbeispiele.

In der Zeichnung stellen dar:

Figur 1    einen Längsschnitt durch die erste
Ausführungsform der Erfindung entlang der Linie A-A der Figur 2,

Figur 2    einen Querschnitt entlang der Linie B-B der Figur 1,

Figur 3     einen Längsschnitt durch die zweite Ausführungsform der Erfindung und

Figur 4     schematisch einen Längsschnitt durch eine modifizierte zweite Ausführungsform der Erfindung.

Die in den Figuren 1 und 2 dargestellte erste Ausführungsform der Erfindung weist einen wärmeisolierten Behälter 10 auf, der eine zylindrische Form hat und vertikal stehend angeordnet ist. Eine untere Platte 12 ist im Abstand vom Behälterboden und eine obere Platte 14 im Abstand vom Behälterdeckel angeordnet. Die Zwischenräume zwischen den Platten 12, 14 und dem Behälterboden bzw. Behälterdeckel sind über eine Vielzahl von sich vertikal durch den Behälter-Innenraum erstreckende Wärmetauscherrohre 16 miteinander verbunden. Der untere Zwischenraum weist einen Einlass für das von den Solarkollektoren zuströmende Heizmedium auf, während der obere Zwischenraum einen Auslass für das zu den Solarkollektoren hinströmende Heizmedium aufweist. Der Raum zwischen den Platten 12 und 14 dient zur Aufnahme von Wasser und ist unten mit einem Kaltwasserzulauf 18 und oben mit einem Warmwasserablauf 20 versehen.

Eine horizontale wärmeisolierte Trennscheibe 22 ist in vertikaler Richtung beweglich in dem Raum zwischen den Platten 12 und 14 angeordnet und wird durch die sie durchsetzenden Wärmetauscherrohre 16

- 13 -

geführt. Die Trennscheibe 22 teilt den Raum zwischen den Platten 12, 14 in zwei in strömungsmitteldichtender Weise voneinander getrennte Kammern 24 und 26. Die Trennscheibe 22 weist, wie in den Figuren 1 und 2 dargestellt, zwei Ventile $V_1$ auf, die als Klappenventile ausgebildet sind und normalerweise durch den höheren Wasserdruck in der unteren Kammer automatisch in ihrer Schliessstellung gehalten werden. Die Ventile $V_1$ wirken mit zwei vertikal nach unten von der oberen Platte 14 vorstehenden Zapfen 28 zusammen, so dass sie in der oberen Stellung der Trennscheibe 22 automatisch durch die Zapfen 28 geöffnet werden. Die obere Stellung der Trennscheibe 22 ist dabei durch die Wärmetauscherrohre 16 umgreifende und von der Trennscheibe 22 nach oben abstehende Hülsen 30 bestimmt, die mit der Platte 14 zusammenwirken und als Abstandshalter dienen. Damit die Zapfen 28 die Ventile $V_1$ in der oberen Stellung der Trennscheibe 22 öffnen können, muss die Länge der Hülsen 30 kürzer als die Länge der Zapfen 28 sein. Andererseits ist die Länge der Hülsen 30 so gross, dass die Trennscheibe 22 in der oberen Stellung sich noch in Strömungsrichtung vor dem Warmwasserablauf 20 befindet.

Die Trennscheibe weist ausserdem, wie aus Figur 2 hervorgeht, noch zwei weitere Ventile $V_2$ auf, die als Rückschlagventile ausgebildet sind und das Wasser in Richtung von unten nach oben durch die Trennscheibe hindurchtreten lassen, wenn in dieser Richtung der Wasserdruck einen bestimmten, durch eine nicht dargestellte Federeinrichtung vorgesehenen, Wert überschreitet. Die Ventile $V_2$ ermöglichen es, die Trennscheibe 22 bei mit Wasser gefüllten Behälter 10 von oben nach unten zu bewegen.

Schliesslich weist die Trennscheibe 22 auf ihrer Unterseite noch mehrere Abstandshalter 32 auf, die in der unteren Stellung der Trennscheibe mit der unteren Platte 12 zusammenwirken, so dass auch in der unteren Stellung der Trennscheibe 22 eine gleichmässige Druckbeaufschlagung der Trennscheibe durch das Kaltwasser gewährleistet ist.

Im normalen Betrieb der Solarheizung befindet sich die Trennscheibe 22 in der oberen Stellung, in der die Ventile $V_1$ aufgrund der Zapfen 28 geöffnet sind und daher das über den Kaltwasserzulauf eingeleitete Wasser nach Erwärmung durch das Solarmedium aus dem Warmwasserablauf entweichen kann. Soll die Solarheizung abgeschaltet werden, so wird zuvor die Trennscheibe 22, beispielsweise durch einen nicht gezeigten, aussen am Behälter 10 angebrachten Stellmotor, nach unten in ihre untere Stellung bewegt, bis sie mit den Abstandshaltern 32 auf der unteren Platte 12 aufliegt. Diese Bewegung wird durch die Ventile $V_2$ ermöglicht, die sich dabei öffnen. Wird dann bei abgeschalteter Solarheizung Warmwasser entnommen, so strömt Kaltwasser von unten nach und die Trennscheibe 22 bewegt sich nach oben, wobei sie die untere Kammer 24, in die das Kaltwasser einströmt,

- 15 -

in strömungsdichtender Weise trennt, da die Ventile $V_1$ und $V_2$ geschlossen sind. Diese Bewegung wird
vorzugweise durch einen an dem Kaltwasserzulauf angeschlossenen Wasserzähler gesteuert.

Ist das Warmwasser vor Beginn des erneuten Einschaltens der Solarheizung noch nicht vollständig aus
dem Behälter 10 entnommen worden, so verbleibt die
Trennscheibe 22 beim Einschalten der Solarheizung
in ihrer Zwischenstellung und wird entsprechend der
Menge des nachfliessenden Kaltwassers bewegt. Erst
wenn das Kaltwasser in der unteren Kammer 24 die
Temperatur des Warmwassers in der oberen Kammer 26
übersteigt, wird die Trennscheibe 22 vollständig
in die oberste Stellung gebracht, in der die Trennscheibe durchlässig ist und nachströmendes Kaltwasser mit dem im Behälter vorhandenen Warmwasser vermischt.

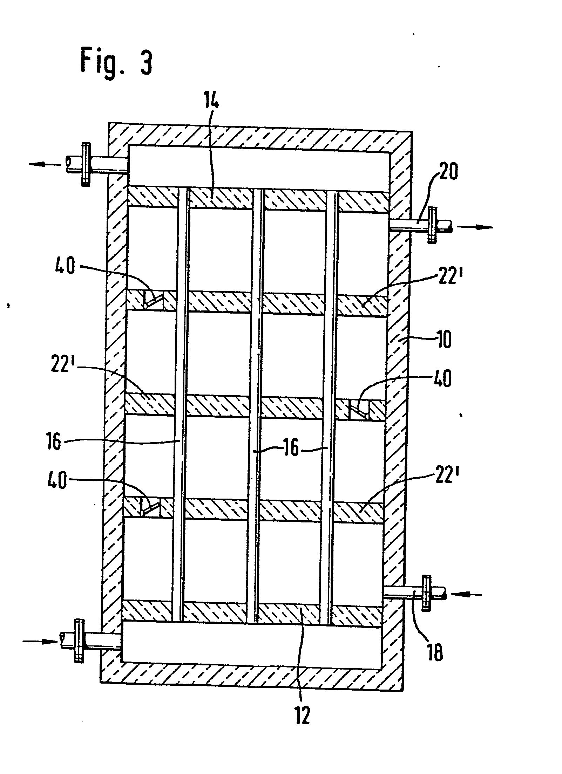

Bei der in Figur 3 dargestellten zweiten Ausführungsform der Erfindung ist der Raum zwischen den Platten
12, 14, also der Raum, der zur Aufnahme des Wassers
dient, in vertikaler Richtung mittels mehrerer unbeweglicher Trennwände 22' in eine Vielzahl von übereinanderliegenden Kammern unterteilt. Die Trennwände
22' weisen jeweils Rückschlagventile 40 auf, die einen Durchfluss des Wassers vom zulaufseitigen Ende
des Behälters zum ablaufseitigen Ende des Behälters
hin ermöglichen, jedoch in umgekehrter Richtung sperren. Die Rückschlagventile 40 liegen jeweils einander
diametral gegenüber, so dass das in jede Kammer nachfliessende Kaltwasser weitgehend das in den Kammern enthaltene Warmwasser hinausdrückt, bevor es selbst aus der jeweiligen Kammer abfliesst.

Wie ferner noch aus der Zeichnung hervorgeht, sind auch die Trennwände 22' wärmeisoliert.

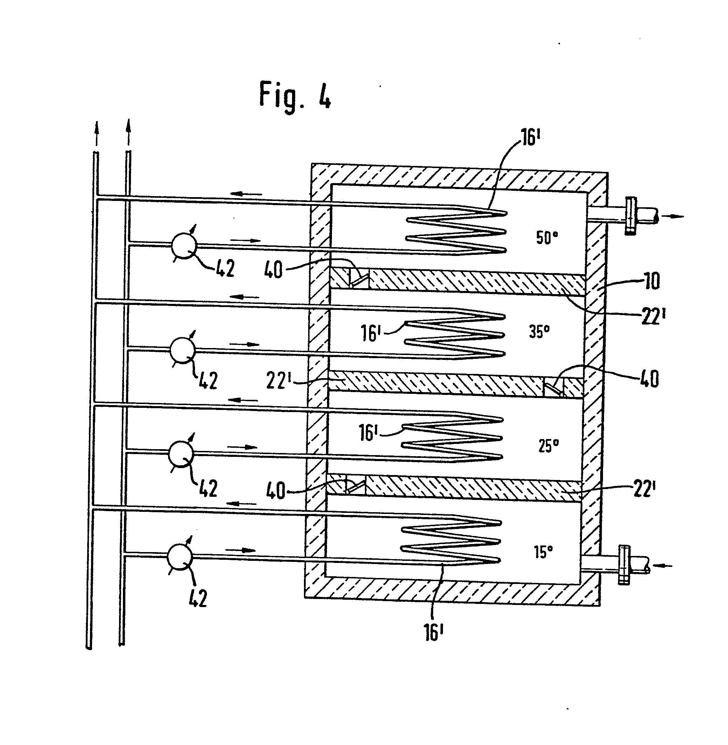

Die in Figur 4 gezeigte, abgeänderte zweite Ausführungsform der Erfindung unterscheidet sich von der in Figur 3 gezeigten zweiten Ausführungsform im Prinzip nur dadurch, dass anstelle von durch alle Kammern hindurchgehenden Wärmetauscherrohren für jede einzelne Kammer eine separate Wärmetauscheranordnung 16' vorgesehen ist. Daher können bei dieser Anordnung auch die in Figur 3 gezeigten Platten 12 und 14 entfallen. Die einzelnen Wärmetauscheranordnungen 16' sind ausserhalb des Behälters 10 parallel zueinander geschaltet und werden jeweils über Regelorgane 42 einzeln in Abhängigkeit von der Temperatur des Heizmediums und der in den Kammern des Behälters 10 vorhandenen Wassertemperaturen gesteuert.

- 1 -

Patentansprüche

1.    Mit Sonnenenergie betriebener Warmwasserbereiter mit einem Behälter (10), einem Kaltwasserzulauf (18) und einem Warmwasserablauf (20) sowie mit von Heizmedium durchströmten Rohren (16, 16'), wobei zwischen dem Kaltwasserzulauf und dem Warmwasserablauf eine den Behälter-Innenraum in zwei Kammern (24, 26) unterteilende Trennwand (22, 22') angeordnet ist,
dadurch gekennzeichnet,
dass die Rohre (16) innerhalb des Behälters (10) angeordnet sind und dass die Trennwand als steife, zwischen dem Kaltwasserzulauf (18) und dem Warmwasserablauf (20) verschiebbare Trennscheibe (22) ausgebildet ist, die eine bei einer Bewegung vom Warmwasserablauf (20) zum Kaltwasserzulauf (18) sich öffnende Ventileinrichtung ($V_2$) aufweist und die in einer Endstellung einen Wasserdurchlauf vom Kaltwasserzulauf (18) zum Warmwasserablauf (20) zulässt.

2.   Warmwasserbereiter nach Anspruch 1, dadurch gekennzeichnet, dass die Trennscheibe (22) für einen freien Wasserdurchlauf in einer Endstellung eine Ventileinrichtung (V$_1$) aufweist, die vorzugsweise bei am Warmwasserablauf (20) befindlicher Trennscheibe (22) öffnet.

3.   Warmwasserbereiter nach Anspruch 1 oder 2, dadurch gekennzeichnet, dass die Ventileinrichtung (V$_2$) als federnd beaufschlagtes Rückschlagventil ausgebildet ist.

4.   Warmwasserbereiter nach Anspruch 2, dadurch gekennzeichnet, dass die Ventileinrichtung (V$_1$) als ein durch den Druck des Kaltwassers in Schliessstellung beaufschlagtes Ventil ausgebildet ist, das durch einen vorzugsweise am Warmwasserablauf (20) angeordneten Anschlag (28) zu öffnen ist.

5.   Warmwasserbereiter nach einem der Ansprüche 1 bis 4, dadurch gekennzeichnet, dass die Bewegung der Trennscheibe (22) vom Kaltwasserzulauf (18) zum Warmwasserablauf (20) in Abhängigkeit von einem Wasserzähler steuerbar ist.

6.   Warmwasserbereiter nach Anspruch 1, dadurch gekennzeichnet, dass die Trennscheibe (22) in ihrer den freien Wasserdurchlauf zulassenden Endstellung vor dem Kaltwasserzulauf (18) bzw. hinter dem Warmwasserablauf (20) positionierbar ist.

7.      Warmwasserbereiter mit einem Behälter (10), einem Kaltwasserzulauf (18) und einem Warmwasserablauf (20) sowie mit von Heizmedium durchströmten Rohren (16, 16'), wobei zwischen dem Kaltwasserzulauf und dem Warmwasserablauf eine den Behälter-Innenraum in zwei Kammern (24, 26) unterteilende Trennwand (22, 22') angeordnet ist, dadurch gekennzeichnet,
dass die Rohre (16, 16', 16'') in beiden Kammern verlaufen und dass die feststehende Trennwand (22') ein sich nach dem Warmwasserablauf (20) öffnendes Rückschlagventil (40) aufweist.

8.      Warmwasserbereiter nach Anspruch 7, dadurch gekennzeichnet,
dass der Behälter (10) mittels mehrerer Trennwände (22') in mehr als zwei Kammern unterteilt ist und dass die Rückschlagventile (40) in den Trennwänden diametral zueinander versetzt liegen.

9.      Warmwasserbereiter nach Anspruch 7 oder 8, dadurch gekennzeichnet,
dass in den Kammern jeweils unabhängig voneinander steuerbare und von Heizmedium durchströmte Rohre (16') angeordnet sind.

10.     Warmwasserbereiter nach Anspruch 9, dadurch gekennzeichnet, dass in den Zuleitungen des Heizme-

- 4 -

diums zu den einzelnen Rohren (16') in Abhängigkeit
von den Temperaturen des Heizmediums und des Wassers
in den Kammern gesteuerte Regelorgane (42) vorgesehen sind.

11.    Warmwasserbereiter nach einem der vorhergehenden Ansprüche, dadurch gekennzeichnet,
dass die Trennwand(e) (22, 22') wärmeisoliert ist
(sind).

Fig. 1

Fig. 2

Fig. 3

0017105

## Fig. 4

**Europäisches Patentamt**

# EUROPÄISCHER RECHERCHENBERICHT

Nummer der Anmeldung

EP 80101505.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 4 049 045 (CANADA SQUARE MANAGEMENT LIMITED) <br><br> + Beschreibung der Fig. 1, Spalten 2-5; Beschreibung der Fig. 4, Spalte 7, 2. bis 4. Absatz + <br><br> -- | 1 |
| A | CH - A5 - 578 718 (KURT ÖEGGERLI) <br><br> + Gesamt + <br><br> -- | 1,7,9, 10 |
| A | US - A - 2 523 261 (O.J. ALVAREZ et al.) <br><br> + Fig. 5 - 10 + <br><br> -- | 1 |
| A | DE - B - 1 027 862 (THEODOR STIEBEL) <br><br> + Beschreibung, Spalte 1, Zeile 22 + <br><br> -- | 1 |
| A | DE - C - 619 781 (BERLINER STÄDTISCHE ELEKTRIZITÄTSWERKE AKTIENGESELLSCHAFT UND PAUL BREITING) <br><br> + Gesamt + <br><br> -- | 1,3 |
| A | CH - A - 379 093 (DOMENICO CONROTTO) <br><br> + Fig. 1,3,4,6 + <br><br> -- | 1,8 |
| D | DE - B - 1 248 265 (HANS BADEWITZ) <br><br> + Gesamt + <br><br> -- | 1 |

### KLASSIFIKATION DER ANMELDUNG (Int.Cl. ³)

F 24 J 3/02
F 24 D 17/00
F 24 D 11/00
F 24 H 7/00

### RECHERCHIERTE SACHGEBIETE (Int. Cl. ³)

F 24 J
F 24 D
F 24 H

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 28-05-1980 | SCHMIDT |

EPA form 1503.1 06.78

0017105

| EINSCHLÄGIGE DOKUMENTE | | | KLASSIFIKATION DER ANMELDUNG (Int.Cl.²) |
| :--: | :--: | :--: | :--: |
| Kategorie | Kennzeichnung des Dokuments mit Angabe, soweit erforderlich, der maßgeblichen Teile | betrifft Anspruch | |
| D | AUSZÜGE AUS DEN GEBRAUCHSMUSTERN, 15. Jahrgang, Heft 20, 18.5.1978, WILA VERLAG FÜR WIRTSCHAFTSWERBUNG, München, Klasse F 24, Seite 814 <br> + F 24 J – 3/02 77 09 124 23.3.77 + <br> ———— | | |
| | | | **RECHERCHIERTE SACHGEBIETE (Int. Cl.²)** |